# EUROPEAN PATENT SPECIFICATION

(11) **EP 2 560 128 B1**
(45) Date of publication and mention of the grant of the patent: **01.03.2017**
(21) Application number: 11290379.4
(22) Date of filing: 19.08.2011
(51) Int. Cl.: H04N 5/232, G11B 27/28, G06K 9/00

(54) **Detecting a scene with a mobile electronic device**
Erkennung einer Szene mit einer mobilen elektronischen Vorrichtung
Détection d'une scène avec un dispositif électronique mobile

(43) Date of publication of application: 20.02.2013
(73) Proprietor: OCT Circuit Technologies International Limited, Dublin 18 (IE)
(72) Inventor: Lesellier, Estelle, 92190 Meudon (FR); Miro Sorolla, Carolina, 92210 Saint Cloud (FR); Tassart, Stéphan, 75019 Paris (FR)
(74) Representative: Grünecker Patent- und Rechtsanwälte PartG mbB

(56) References cited:
- WO-A1-2012/027186
- US-A1- 2010 260 419
- US-A1- 2011 081 082
- US-B1- 6 301 440
- YAO WANG ET AL: "Multimedia Content Analysis - Using Both Audio and Visual Clues", IEEE SIGNAL PROCESSING MAGAZINE, IEEE SERVICE CENTER, PISCATAWAY, NJ, US, vol. 17, no. 6, 1 November 2000 (2000-11-01), pages 12-36, XP011089877, ISSN: 1053-5888, DOI: 10.1109/79.888862
- M.R. NAPHADE ET AL: "Extracting semantics from audio-visual content: the final frontier in multimedia retrieval", IEEE TRANSACTIONS ON NEURAL NETWORKS, vol. 13, no. 4, 1 July 2002 (2002-07-01), pages 793-810, XP55015038, ISSN: 1045-9227, DOI: 10.1109/TNN.2002.1021881

## Description

### TECHNICAL FIELD

The invention relates to the field of signal processing, and more particularly to the detection of a scene by a mobile electronic device, as well as the acquisition of data comprising the detection of a scene.

### BACKGROUND

In the field of image signal processing by mobile electronic devices, knowing the scene in which data is to be acquired is advantageous, notably for ulterior reconstruction of the captured data.

For this reason, many Digital Signal Controllers (DSCs) of cameras include a manual scene selector, leaving to the user the responsibility to select the suitable scene. This is however not convenient for the user, and the user may not efficiently select the scene or select a wrong scene if not paying attention.

More recently, automatic scene detection systems have also appeared in cameras. Such systems are typically based on the following image analyzers: global motion estimation, face detection, image histogram. Examples of such systems are provided in documents US 6,301,440 B1, US 2007/0223588 A1, and in the paper *"*Real-time optimization of Viola-Jones face detection for mobile platforms" by J. Ren et al., Circuits and Systems Workshop: System-on-Chip - Design, Applications, Integration, and Software, 2008 IEEE Dallas, Pages 1-4. Yet, such systems suffer from poor robustness, temporal instabilities and can detect only a limited number of scenes. Indeed, such systems are usually limited to combinations of portraits scenes in various light conditions, and sometimes landscapes.

### SUMMARY

The object of the present invention is to alleviate at least partly the above mentioned drawbacks. More particularly, the invention aims to improve the way of detecting a scene with a mobile electronic device.

This object is achieved with a method implemented by a mobile electronic device for detecting a scene. The method comprises capturing image data and audio data. The method also comprises analyzing both the image data and the audio data. And the method comprises determining a scene according to said analyze.

This object is also achieved with a computer program comprising instructions for performing the method.

This object is also achieved with a data storage medium having recorded thereon the program, and being thus adapted for performing the method.

This object is also achieved with a mobile electronic device adapted for performing the method. For example, the device comprises at least one camera, at least one microphone, the data storage medium, and a processor arranged for executing the program recorded on the data storage medium.

The invention offers many advantages, including the following:
- The invention improves the way of performing the detection.
- Because the invention improves the way of performing the detection, the invention improves the use of the mobile electronic device.
- Because the detection relies on both the image data and the audio data, and not only on one of the image data or the audio data, the invention performs a more robust detection of the scene. For example, the detected scene corresponds to what users of the mobile electronic device would want to manually select.
- Because the detection relies on two types of data, i.e. the image data and the audio data, the invention may be suitable in examples for detecting a high number of scenes.
- Because the detection is more robust and may be performed among more scenes, the algorithms used in the detection may be of lower complexity. This makes the invention particularly adapted for mobile phones which may suffer from too complex algorithms.

In an example, the analyzing may comprise evaluating presence of at least one type of image in the image data and evaluating presence of at least one type of audio in the audio data.

In such a case, the type of audio may include an environmental type of audio.

Furthermore or alternatively, evaluating the presence of at least one type of image and/or audio may comprise evaluating a probability of the presence of said at least one type of image and/or audio. Also or else, evaluating the presence of at least one type of image and/or audio may comprise evaluating a time of the presence of said at least one type of image and/or audio.

In an example, determining the scene may comprise selecting the scene amongst a group including any or a combination of a portrait scene, a sport scene, a vegetal landscape scene, a snow landscape scene, a beach landscape scene and/or an urban scene. In other words, it may be provided a group including one, or several, or all of the above scenes, and one of the scenes of the group may be selected.

In such a case the analyzing may comprise evaluating presence of at least a face in the image data and a voice in the audio data, when the group includes the portrait scene. The analyzing may comprise evaluating presence of at least a face, an indoor location and a local motion in the image data, and a car or a truck engine, and a ball impact in the audio data, when the group includes the sport scene. The analyzing may comprise evaluating presence of at least a vegetal and an outdoor location in the image data, landscape bird calls, dog barks, caterwaul and domestic bird calls and wind noise in the audio data, when the group includes the vegetal landscape scene. The analyzing may comprise evaluating presence of at least snow and an outdoor location in the image data, and wind noise in the audio data, when the group includes the snow landscape scene. The analyzing may comprise evaluating presence of at least sea, an outdoor location and a global motion in the image data, and seagull bird calls, wind noise and sea waves in the audio data, when the group includes the beach landscape scene. The analyzing may comprise evaluating presence of at least a face, artificial lines, an outdoor location, a road sign and a global motion in the image data, wind noise, a bicycle bell, a car or truck engine, a car horn, and sirens sound in the audio data, when the group includes the urban scene.

In an example, the device may be a mobile electronic communication device, for example a mobile phone.

In an example, the method for detecting a scene is part of a method for acquiring data including image and/or audio data, performed by the same mobile electronic device. The method for acquiring data comprises the method for detecting a scene and acquiring the data following a scheme depending on the scene that has been detected. The program, the data storage medium, and the mobile electronic device may thus be adapted for performing the method for acquiring data as well.

Such acquiring of data offers many advantages, in addition to the ones already discussed above:
- Because the acquiring relies on the scene which has been detected, the acquiring of data is improved compared to a case with no scene detection.
- Because the detection of the scene is improved, the acquiring is all the more improved, compared to cases where the detection is performed based on only the image data or only the audio data.
- In examples, both image and audio data may be acquired by performing the method. Thus, the acquiring is not necessarily focused on one type of data.

In an example, the scheme may comprise capturing image and audio data from the detected scene, detected by the method for detecting a scene (i.e. the capturing of image and audio data involved when performing the detecting). The scheme may also comprise modifying the captured data depending on the scene that has been detected.

Modifying the captured data depending on the scene which has been detected offers several advantages:
- The captured data are adapted before being outputted.
- Modifying the captured data allows a refined output, e.g. display of images and/or play of audio.

In an example, the detecting and the acquiring steps may be iterated.

Further features and advantages of the invention will appear from the following description of embodiments of the invention, given as non-limiting examples, with reference to the accompanying drawings listed hereunder.

### BRIEF DESCRIPTION OF THE DRAWINGS

Fig. 1 shows a flowchart representing an example of a method for detecting a scene.
Fig. 2 shows a block diagram representing an example of a mobile electronic device.
Fig. 3 shows a flowchart representing an example of a method for acquiring data.

### DETAILED DESCRIPTION

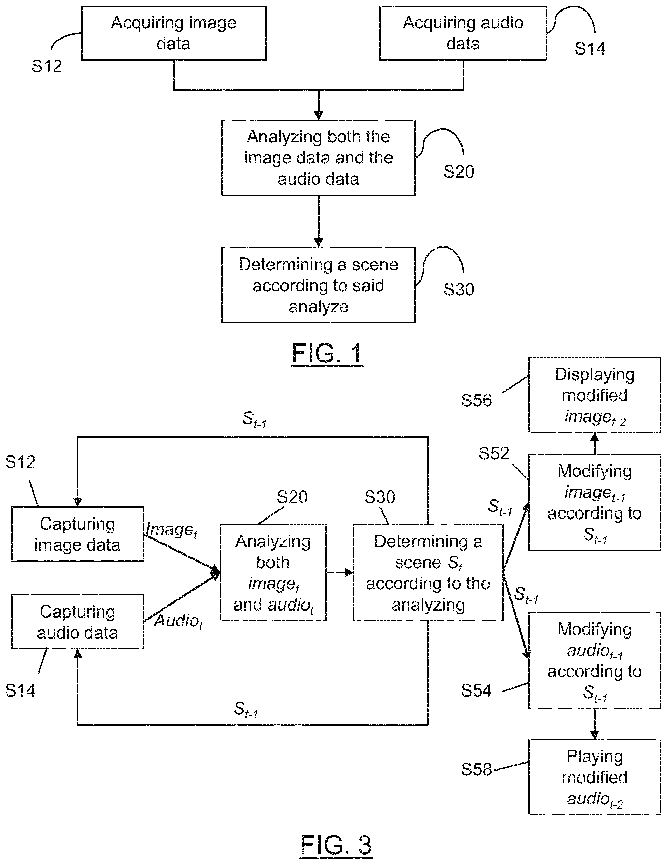

It is referred to Fig. 1 which shows a flowchart representing an example of a method for detecting a scene. The method is implemented by a mobile electronic device. The method comprises capturing (S12, S14) image data and audio data. The method comprises analyzing (S20) both the image data and the audio data. And the method comprises determining (S30) a scene according to said analyze (S20). Such a method improves the way of detecting a scene with a mobile electronic device.

The method is implemented by a mobile electronic device. This means that the method is computerized. All the steps of the method are implemented by the device, possibly through user-interaction, notably for triggering steps of the method, such as the capturing (S12, S14). Thus, the method allows an at least partly automatic detection of a scene, and therefore a fast detection. By "mobile" electronic device, it is meant any electronic device transportable by a human user, e.g. easily, and which is adapted for being normally used (e.g. at least switched on and off) by the user while the device is transported. This may be a camera, a mobile phone, a DSC, a tablet or a PDA. In examples, the device may weigh less than 1 kg, preferably less than 500 g.

The method is for detecting a scene. By "scene", it is meant the context within which the capturing (S12, S14) is performed. Typically, a human user uses the device, e.g. by handling the device. The device captures (S12, S14) raw data including image data and audio data, possibly on user command. This may be performed through dedicated sensors, e.g. a camera and e.g. a microphone, that translate waves into numeric image data (e.g. in Raw Bayer/RGB/YUV format) and numeric audio data (e.g. WAV format). This means that numeric data representing the raw image and the raw audio are created at the level of the device. Detecting a scene means analyzing (S20) the numeric data and determining (S30) a predefined context wherein the data have been captured. Of course, as a result of capturing and analyzing the numeric data, it is possible to determine no scene (e.g. if no correct context is found) or two scenes or more (e.g. if contexts are not exclusive one of the other). The following discussion is however focused on the case of determining (S30) one scene.

As the method is computerized, the scenes which are foreseen are predefined. For example, determining (S30) the scene may comprise selecting the scene among a group of predefined scenes. The selection is in such a case performed depending on the analyzing (S20). More particularly, referring to object-oriented programming, determining (S30) a scene means interpreting the image and audio data as representing an instance of a predefined category or class, i.e. the scene. Thus, determining (S30) a scene means determining the class in which the image and audio data may be classified. The scene may have attributes. In such a case, the method may further comprise determining values for these attributes based on the image and audio data. These values are referred to as "scene properties". Determining scene properties is useful notably in the case that the data acquisition is to be adapted following the scene which has been determined.

Analyzing (S20) both the image data and the audio data includes performing signal processing on both the image data and the audio data, in their numeric form. The analyzing (S20) is predefined by a scheme that leads to determining (S30) a scene. In other words, a decision scheme is provided and is inputted with both the (numeric) image and audio data. Possibly with intermediate results, the method determines (S30) a scene by following the decision scheme. Because the analyzing (S20) relies on two types of data, i.e. both the image and the audio data, the determining (S30) is more robust. This means that the device determines (S30) the correct scene in more cases, the correct scene being e.g. the scene that would be selected manually by a user if manual selection is provided. Because the analyzing (S20) relies on both the image and audio data, more scenes may be foreseen, and as a consequence, the detection may be more refined. In an example, more than five, preferably more than ten, different scenes may be provided and the determining (S30) may thus comprise selecting one of the five, preferably ten, scenes.

The detection of the scene may serve any purpose. For example, the detection of the scene may be for information purposes. However, in the field of signal processing with mobile electronic devices, an objective may be to acquire image and/or audio data, for example a photo, an audio track or a video, (e.g. for outputting such data, e.g. to a user, or for storing such data) in an optimized way. Thus, as known *per se* in this field, the device may associate specific signal processing algorithms to each of the provided scenes (for example in a memory of the device). As widely known, the signal processing algorithms may ameliorate the data which are captured, after they are captured, depending on the scene which has been detected. The signal processing algorithms may additionally or alternatively compress the captured data in a "smart" way (i.e. by avoiding a too great loss of information), depending on the scene which has been detected.

Thus, the method for detecting a scene may be part of a method for acquiring data including image and/or audio data. The method for acquiring data comprises detecting a scene as explained above, and acquiring the data following a scheme depending on the scene which has been detected. Because the detection is improved, the method acquires data in an optimized way. Notably, the scheme may comprise the capturing (S12, S14) of image and audio data for which the detection method is performed, and modifying the captured data depending on the scene which has been detected. Thus, in this case, acquiring data means capturing data (i.e. translating waves into numeric data) and then modifying the captured data (i.e. through numeric signal processing).

In other words, the mobile electronic device may capture (S12, S14) image and audio data, e.g. in a numeric form. The electronic device may then analyze (S20) both the image and audio data. The electronic device may then determine (S30) a scene, based on the analyzing (S20). Based on the determined scene, the device may optimize the previously captured data (i.e. ameliorate the quality of the data or compress the data in a smart way). This implies modifying the captured data according to the determined scene. The device may then store the modified data and/or output the modified data (e.g. play or display the modified data to a user).

In the following, if not specified, the expression "the method" refers to either one of the method for detecting a scene or the method for acquiring data.

Many examples of optimizing the captured data depending on the scene which has been detected exist in the art. Some of these schemes are now discussed by way of non-limiting examples. The method may comprise modifying the data according to one or several of these schemes. In the field of image acquisition, most cameras offer manual scene selection, and implement algorithms depending on the selected scene. The method may implement these algorithms, the difference being that the scene is not manually selected but detected by the method for detecting a scene. Other known schemes for optimizing captured data depending on a detected scene include demosaizing (e.g. interpolation of color components for missing pixels), noise reduction, auto-white balance, application of color matrices (e.g. modification of the color referential to make colors more realistic). In the field of audio data acquisition, some encoding schemes depend on the scene which has been detected. This is notably the case of the scheme disclosed by the speech codec discontinuous transmission (DTX) specification, wherein a specific speech encoding scheme is used based on a content identification, e.g. voice vs. background noise. This is also the case of the scheme disclosed by the universal speech and audio codec (MPEG USAC) specification, wherein a specific encoding scheme is also used based on the content identification: e.g. voice vs. music.

The method may be iterated. In this case, the method may comprise performing the capturing (S12 and/or S14) following a scheme depending on a scene which has been previously detected. In other words, the mobile electronic device may capture (S12 and S14) image and audio data, in a numeric form. The electronic device may then analyze (S20) both the image and audio data. The electronic device may then determine (S30) a scene, based on the analyzing (S20). Based on the determined scene, the device may optimize the previously captured data as explained earlier. The device may then store the modified data and/or output the modified data (e.g. play or display the data to a user). In addition, in this example, the device repeats the above steps. However, the device re-executes the capturing (S12 and/or S14) taking into account the previously determined scene. For example, the device may adapt the exposure time, the gains, and/or the focus depending on the scene which has been detected.

The method may be performed based on a computer program comprising instructions for performing the method. The program is executable on a programmable device. The application program may be implemented in a high-level procedural or object-oriented programming language, or in assembly or machine language if desired. In any case, the language may be a compiled or interpreted language. The program may be a full installation program, or an update program. In the latter case, the program is an update program that updates a programmable device, previously programmed for performing parts of the method, to a state wherein the device is suitable for performing the whole method.

The program may be recorded on a data storage medium. The data storage medium may be any memory adapted for recording computer instructions. The data storage medium may thus be any form of nonvolatile memory, including by way of example semiconductor memory devices, such as EPROM, EEPROM, and flash memory devices; magnetic disks such as internal hard disks and removable disks; magneto-optical disks; and CD-ROM disks.

A mobile electronic device suitable for performing the method may be a mobile electronic device comprising at least one camera, at least one microphone, the above data storage medium (e.g. a memory having recorded thereon instructions for performing the method), and a processor, e.g. a Central Processing Unit (CPU), arranged for executing the program recorded on the data storage medium, i.e. for performing steps of the method. Typically, the program is stored on at least one hardware memory of the device. The memory may also store any other information used by the method. For example, the memory may store information such as the captured image data and audio data, and the determined scene.

The device may be a communication device. The device may thus comprise a signal emitter and a signal receiver. For example, the device may be a telephone. The device may be a wireless communication device. The device may for example be a mobile phone (e.g. a cell phone).

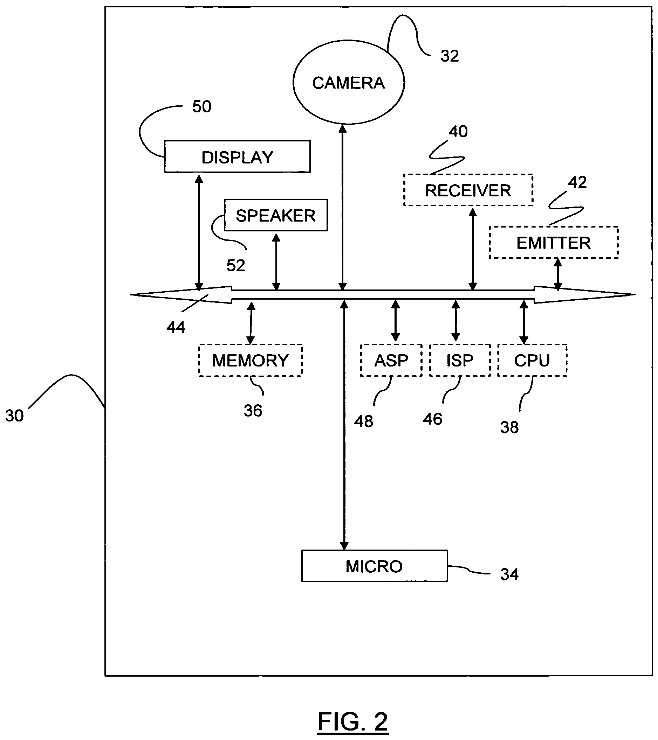

It is referred to Fig. 2 which shows a block diagram representing an example of a mobile electronic device 30, which may be a mobile phone, suitable for implementing the method. Device 30 may thus be used for capturing audio and image data and determining a scene within the data in a fast, robust and refined way. For this, the device 30 comprises camera 32 and microphone 34 for respectively capturing image and audio data. Device 30 also comprises memory 36 which may comprise volatile and non-volatile memory (not distinguished on the figure). Memory 36 may be divided in several compartments, possibly physically apart in device 30. Memory 36 stores, recorded thereon, instructions for performing the method, possibly already compiled or pre-compiled. Memory 36 also stores, in a volatile or non-volatile way, any captured image and audio data, and any other information used when using device 30 e.g. for performing the method. Device 30 also comprises processors including CPU 38, Image Signal Processor 46 (ISP) and Audio Signal Processor 48 (ASP). These processors accomplish the steps of the method by accessing data through bus 44, by processing the data or by circulating the data through the bus 44. Of course, fewer than three processors may physically be embodied, e.g. if one processor accomplishes all computations. On the other hand, more than three processors may physically be embodied, e.g. in the case of parallel processing. Device 30 also comprises display 50 and speaker 52 for outputting data, i.e. for respectively displaying image data and playing audio data. Device 30 also comprises receiver 40 and emitter 42, which are for communicating with the exterior e.g. with other devices, e.g. if device 30 is a cellular phone.

The analyze (S20) may comprise evaluating the presence of at least one type of image in the image data and evaluating presence of at least one type of audio in the audio data. In other words, the analyze (S20) may comprise searching for a specific element in the context in which the data was captured (S10). The specific element might be translated into a specific "type" of image data and/or a specific "type" of audio data. The analyze (S20) may comprise searching for such a type. For example, if determining (S30) the scene comprises selecting the scene among a group of predefined scenes (i.e. scenes predefined e.g. in the memory of the device), each scene may be associated, in a predetermined relation, to at least one type of image and at least one type of audio. For detecting a specific scene, i.e. determining the scene at (S30), the method may have evaluated that the associated type of image and type of audio are present in the captured data during the analyze (S20). Furthermore, in case several types of image and/or several types of audio are provided, the method may evaluate presence of each of the types in parallel, independently of the parallel evaluations. This allows a simple maintaining of the program, as software bricks (e.g. a brick coding the evaluating of presence of a given type) may be simply added or deleted for updating the program if required. This independent blocks structure thus has the advantage to bring more flexibility to the system (ease of use, maintenance) since a block can be replaced/added/removed/upgraded independently of others.

Furthermore, this all allows a simple and fast analyze (S20) and determination (S30). This low complexity is particularly advantageous for a mobile device. The scene detection in mobile devices such as mobile phones may be time constrained. This is due to the fact that the capturing and rendering of the current image and audio may have to be improved immediately (e.g. at each preview frame, with an interframe duration e.g. shorter than 60ms) depending on the result of the automatic scene detection. Thus, evaluating presence of at least one type of image in the image data and evaluating presence of at least one type of audio in the audio data, and determining (S30) the scene as a scene associated to the present types in the predetermined relation, is more advantageous than other solutions, such as solutions based on comparisons with similar data in remote data bases wherein there are large network latencies (e.g. longer than Is). Also, the limited computation power of a mobile device may also constrain the algorithms implemented for the scene detection. In the case of the method, even with algorithms of low complexity such as the one disclosed above, the detection has good robustness, because the presence of both a type of image and a type of audio is evaluated.

The types of audio (of which presence is evaluated) may include an environmental type of audio (at least one). A type of audio is said to be "environmental" if it provides information regarding the environment. An environmental type of audio may be defined in opposition to a speech type of audio. A speech type of audio is defined as a pattern of a speech (i.e. a human voice). An environmental type of audio is any other type of audio. It is noted that "speech" itself may be an environmental type of audio. However, detecting words, tonalities, identity of speaker, etc. within the speech is not detecting an environmental type of audio. As widely known, evaluating presence of an environmental type of audio and evaluating presence of a speech type of audio imply different steps.

The environmental types of audio may include any or a combination of voice, child voice, landscape bird calls, seagull bird calls, dog barks, caterwaul, domestic bird calls, wind noise detector, sea waves, laughter, applause, instrument nota, music, bicycle bell, car/truck engine, public transport horn/message, car horn, sirens (e.g. of police), firework sounds, ball impact (e.g. tennis), TV sound. Detecting the above environmental types is known to the one skilled in the art, as algorithms for evaluating the presence of environmental types of audio are numerous. The following documents provide detectors for some of the above-mentioned examples of environmental types of audio: the paper *"*MPEG-7 Sound Recognition Tools" by M. Casey, in Circuits and Systems for Video Technology, IEEE Transactions on June 2001, Vol. 6, pp. 743-747; the paper *"*Human attention model for semantic scene analysis in movies" by Zhang et al., ICME 2008; the thesis of K. D. Martin in June 1999 at Massachussets Institute of Technology entitled "Sound-source recognition: a theory and computational model*",* the dissertation entitled *"*Detecting Bird Sounds via Periodic Structures: A Robust Pattern Recognition Approach to Unsupervised Animal Monitoring" by Daniel Wolff in May 2008; the paper *"*Dual-Microphone Sounds of Daily Life Classification for Telemonitoring in a Noisy Environment" by Maunder et al., in 30th Annual International IEEE EMBS Conference, Vancouver, Canada, pp. 4636-4639, August 20-24, 2008. The method may of course evaluate presence of the environmental type of audio according to the schemes disclosed in the above papers or any other suitable scheme.

Evaluating the presence of an environmental type of audio, e.g. rather than speech analysis module, makes the method more adapted for mobile devices. In the case of mobile devices and for the applications considered for such systems, such as photo taking, video recording, audio recording, environmental sound analysis is preferred because of the general kind of the detected scenes.

Evaluating the presence (of a type of image or a type of audio) may comprise evaluating a probability of presence (of the specific type). In other words, rather than simply determining if a type is present or not, the method evaluates (any measure of) the probability that the evaluated type is present. This allows a refined analysis.

Evaluating the presence may also or alternatively comprise evaluating a time of presence. This allows a synchronous execution of the method. Indeed, as the evaluations of presence of types may be performed independently for each type, evaluating a time of presence allows ensuring that the correct data are compared. For example, correctly detecting a given scene may require evaluating presence of a given type of image and a given type of audio (e.g. with a high probability) at the same time. In such a case, evaluating a time of presence, or "timestamp", allows that no false positive will be provided in the case of consecutive (i.e. non simultaneous) presence of the given types. This timestamp may thus be used by the fine automatic scene detector to synchronize information and out-of-date data to be discarded.

Determining (S30) the scene may comprise selecting the scene among a group including any or a combination (i.e. one, or several, or all) of a portrait scene, a sport scene, a vegetal landscape scene, a snow landscape scene, a beach landscape scene and/or an urban scene. For example, if a user uses the mobile device for taking a picture in a city, the method allows determining (S30) the scene to be the urban landscape. If a user uses the mobile device for recording a video at the beach, the method allows determining the (S30) the scene to be the beach landscape scene. This allows ulterior refinement of the capturing (S10) and/or modifying the captured data, as explained above. The above-mentioned scenes constitute a group of most useful scenes for mobile devices such as mobile phones. Indeed, adapting the data acquisition according to the above scenes proves to be the most useful in such applications.

An example of the analyze (S20) of both the image data and the audio data is now discussed with reference to Table I. In this example, the analyze (S20) comprises evaluating presence of at least one type of image in the image data and evaluating presence of at least one environmental type of audio in the audio data. The first column (the leftmost column) of Table I gathers all the scenes which may possibly be detected, i.e. determined at (S30). Indeed, the method of the example comprises selecting the scene among a group including any or a combination of all the scenes provided in Table I. The second column provides the minimal types of image of which presence is evaluated with respect to a given scene. For example, for detecting a portrait scene, the method comprises evaluating presence of at least the type "face" in the image data. The third column provides the minimal types of environmental image of which presence is evaluated with respect to the given scene. Continuing with the example of the portrait scene, the method comprises evaluating presence of at least the type "voice" in the audio data. The idea by combining audio and image type detectors is to further improve this robustness (by reducing the number of un-determination and false positive detected scenes) compared to purely image based system.

**Table I. Scenes possibly includable in the group of scenes from which the scene is determined at (S30), with, for each scene, the minimal types for which presence is evaluated.**

| **Scene** | **Image types** | **Environmental audio types** |
|---|---|---|
| Portraits | Face | Voice |
| Child portraits | Child face, local motion | Child voice |
| Vegetal landscape | Vegetal, outdoor location | landscape bird call, Dog bark, caterwaul, domestic bird call, wind noise |
| Urban landscape | Face, artificial lines, outdoor location, road sign, global motion | wind noise, bicycle bell, car/truck engine, car horn, sirens (e.g. police) |
| Snow landscape | Snow, outdoor location | wind noise |
| Beach landscape | Sea/water, outdoor location, global motion | Seagull bird call, wind noise, sea waves |
| Pets | Dog/Cat head, fur texture, local motion | Dog bark, caterwaul, domestic bird call |
| Sports | Face, outdoor location, global motion | car/truck engine, ball impact (e.g. tennis) |
| Fireworks | Outdoor location | Fireworks sounds |
| Theatre/concert | Face, artificial lines, indoor, | Voice, laughter, applause, instrument nota, music |
| At school | Child face | |
| In public transportation/in car | Artificial lines, outdoor location, road sign, public transport logo, global motion | Voice, car/truck engine, public transport horn/message |
| In crowd | Face, global motion | Voice |
| At home | Indoor location | TV sound |

Of course, all the evaluations may be performed in parallel, by as many "type detectors" as there are types. If the device provides for detecting several scenes, i.e. at several lines of the table, then the device provides for evaluating presence of all the image and audio types in the boxes of the second and third columns in the same lines. It is noted that evaluating presence of all the types of Table I is known *per se* and may be implemented by any adapted algorithms. In other words, how the detectors function is known *per se* and is not the object of the present discussions.

Determining (S30) the scene once detectors have run, i.e. once detectors have evaluated presence (e.g. probability of presence and/or time of presence) of respective types (i.e. contents) in the image and audio data may be performed in any convenient way known by the one skilled in the art. For example, the method may determine (S30) the scene which is associated to the types which have the highest probability of presence. In another example, the method may put weights to certain types and compute a likeliness for each scene (independently one of the other) and select the most likely scene e.g. with a fine scene detection engine. These examples are known as "late fusion" and have the advantage of fast machine learning, high modularity, and good management of asynchronous information. In contrast, "low fusion" is a decision process with only one layer outputting a single scene as a result when inputting a vector of presence of types. With "low fusion", the information regarding all scenes interacts together in a dynamic way. This allows a robust determination.

The suitable combination per scene (implemented into the fine scene detection engine) can be determined empirically. It can for instance be formulated as a weighted sum of the probability of presence of the detected type or a decision tree with comparison of these probabilities with respect to pre-defined thresholds. A more convenient alternative can be the use of a supervised machine learning algorithm, e.g. neural networks, such as disclosed in the paper *"*Neural Networks: A comprehensive Foundation" by Simon Haykin in 1998. In such a case, the method may thus perform two steps:
- An off-line learning phase from a dual image and audio database which determines the weights applied to each type for a determined scene,
- An on-line real-time analysis phase that uses the weights computed offline.

An example of the analyze (S20) of both the image data and the audio data is now discussed with reference to Table II. This example may be combined with the example discussed with reference to Table I. In this example, the analyzing further comprises determining properties associated to each type. These properties, e.g. position, frequency of appearance, may be used for determining scene properties. Table II provides the properties of types (image or audio) of table I. How to determine the properties is known *per se.*

**Table II. Properties that may be determined at the analyzing (S20) by image or audio type.**

| **Image type or Audio type** | **Properties** |
|---|---|
| Face | Position, number (of faces), size, rotation angle, |
| Child face | Position, number (of faces), size, rotation angle, |
| Dog/Cat head | Position, number (of faces), size, rotation angle, |
| Sea/water | Position, surface, mean |
| | motion/deformation amplitude and periodicity |
| Vegetal | Position, surface, colours, textures |
| Snow | Position, surface, mean intensity |
| Artificial lines | Position, numbers, length |
| Fur texture | Position, surface |
| Road sign | Position, number, size |
| Public Transport logo | Position, number, size |
| Local/global motion | Position, motion amplitude, trajectory |
| Voice | Emission direction, number (of voices) |
| Child voice | Emission direction, number (of voices) |
| Landscape bird calls | Number (of calls) |
| Seagull bird calls | Number (of calls) |
| Dog barks, caterwaul, domestic bird call | Emission direction, Number (of sounds) |
| Wind noise | Noise amplitude |
| Sea waves | Noise amplitude |
| Laughter | Intensity |
| Applause | Intensity |
| Instrument nota | Emission direction, number of sounds |
| Music | Emission direction, intensity |
| Bicycle bell | Emission direction, number of bells |
| Car/truck engine | Noise amplitude |
| Public transport horn/message | Number |
| Car horn | Number |
| Sirens (e.g. police) | Number |
| Firework sounds | Intensity |
| Ball impact (e.g. tennis) | Emission direction, intensity |
| TV sound | Intensity |

It is now referred to Fig. 3 which shows a flowchart representing an example of the method for acquiring data wherein the detecting and the acquiring are iterated. In the example, the scheme comprises capturing (S12) image data and capturing (S14) audio data which are part of the detecting, and modifying (S52, S54) the captured data depending on the scene which has been detected.

In the example, the steps (S12, S14, S20, S30, S52, S54, S56, S58) of the method are iterated in a continuous manner. The figure represents a caption of the method at time *t.* At time *t,* the method captures (S12, S14) the image and audio data *Image,* and *Audioₜ.* Slightly after this, the method analyzes (S20) *Imageₜ* and *Audioₜ* and determines (S30) the scene *Sₜ* according to the analyzing (S20), thereby performing the detection. In the example, the capturing (S12, S14) depends on previously determined scene *Sₜ₋₁.* Namely, type and properties of *Sₜ₋₁* may be fed to ISP and ASP of the device which act on sensors of the device, such as camera and microphone, for adapting the capturing (S12, S14) accordingly, as discussed earlier. Substantially at time *t,* the method also comprises modifying (S52, S54) *Imageₜ₋₁* and *Audioₜ₋₁* which have been captured earlier, at a previous iteration of the determining (S30) (when determining scene *Sₜ₋₁*). The modifying (S52, S54) also depends on scene *Sₜ₋₁* which has been detected previously. The modifying (S52, S54) may improve the quality of *Imageₜ₋₁* and *Audioₜ₋₁* as discussed earlier. Substantially at time *t,* the method also comprises displaying (S56) modified *Imagesₜ₋₂,* and playing (S58) modified *Audioₜ₋₂. Imageₜ₋₂* and *Audioₜ₋₂* have been modified in a previous iteration of the method at time *t-1* depending on previously determined scene *Sₜ₋₂* (determined at time *t-2).* Thus, the method allows acquiring image and audio data in a continuous manner, by the capturing (S12, S14) and the modifying (S52, S54), in an improved manner such that when outputted at (S56, S58), the data is of improved quality. In an example, the analyzing (S20) may be iterated every time frame superior to 1 ms, preferably 10 ms, more preferably 50 ms, and inferior to 10 s, preferably 1 s, and more preferably 100 ms. Thus, the analyzing (S20) is performed on blocks of data captured (S12, S14) during such time frame.

The invention has been described with reference to preferred embodiments. However, many variations are possible within the scope of the claims. Notably, in the examples provided above, the method comprises actually determining a scene (a scene is determined in effect). However, the method may simply detect that there is no scene (at least no predefined scene). Furthermore, in the examples provided above, the method detects the scene automatically. However, in an example, the method may evaluate presence of at least one image type and at least one audio type. Depending on the result, the device may determine a scene automatically, or the device may ask the user to interact with the device for selecting a scene, e.g. if the result is judged ambiguous.

## Claims

1. A method for acquiring data including image and audio data, the method comprising :
• at time t-1, detecting a scene according to a method implemented by a mobile electronic device for detecting a scene that comprises:
- capturing (S12, S14) first image data and first audio data, Imageₜ₋₁ and Audioₜ₋₁;
- slightly after this step of capturing (S12, S14), analyzing (S20) both the first image data and the first audio data, Imageₜ₋₁ and Audioₜ₋₁, and determining (S30) a scene Sₜ₋₁ according to said analyzing (S20);
• at time t:
- detecting a scene according to a method implemented by a mobile electronic device for detecting a scene that comprises :
▪ capturing (S12, S 14) image data and audio data, Imageₜ and Audioₜ, depending on said scene Sₜ₋₁ that has been detected at time t-1;
▪ slightly after this step of capturing (S12, S14), analyzing (S20) both the image data and the audio data, Imageₜ and Audioₜ, and determining (S30) a scene *Sₜ* according to said analyzing (S20); and
- modifying (S52, S54) said image and audio data, Imageₜ₋₁ and Audioₜ₋₁, which have been captured at time t-1, depending on said scene Sₜ₋₁ that has been detected at time t-1;
• attimet+1:
- modifying (S52, S54) said image and audio data, Imageₜ and Audioₜ, which have been captured at time t, depending on said scene Sₜ that has been detected at time t;
wherein:
- the detecting and the modifying steps (S12, S14, S20, S30, S52, S54) implemented at time t are iterated.

2. The method of claim 1, wherein the analyzing (S20) comprises evaluating presence of at least one type of image in the image data and evaluating presence of at least one type of audio in the audio data.

3. The method of claim 2, wherein the type of audio includes an environmental type of audio.

4. The method of claim 2 or 3, wherein evaluating the presence of at least one type of image and/or audio comprises evaluating a probability of the presence of said at least one type of image and/or audio.

5. The method of claim 2, 3 or 4, wherein evaluating the presence of at least one type of image and/or audio comprises evaluating a time of the presence of said at least one type of image and/or audio.

6. The method of any of claims 1-5, wherein determining (S30) the scene comprises selecting the scene amongst a group including any or a combination of a portrait scene, a sport scene, a vegetal landscape scene, a snow landscape scene, a beach landscape scene and/or an urban scene.

7. The method of claim 6, wherein the analyze (S20) comprises evaluating the presence of at least:
- a face in the image data and a voice in the audio data, when the group includes the portrait scene;
- a face, an indoor location and a local motion in the image data, and a car or a truck engine and a ball impact in the audio data, when the group includes the sport scene;
- a vegetal and an outdoor location in the image data, landscape bird calls, dog barks, caterwaul and domestic bird calls and wind noise in the audio data, when the group includes the vegetal landscape scene;
- snow and an outdoor location in the image data, and wind noise in the audio data, when the group includes the snow landscape scene;
- sea, an outdoor location and a global motion in the image data, and seagull bird calls, wind noise and sea waves in the audio data, when the group includes the beach landscape scene; and/or
- a face, artificial lines, an outdoor location, a road sign and a global motion in the image data, wind noise, a bicycle bell, a car or truck engine, a car horn, and sirens sound in the audio data, when the group includes the urban scene.

8. A computer program comprising instructions for performing the method of any of claims 1-7.

9. A data storage medium having recorded thereon the program of claim 8.

10. A mobile electronic device comprising:
- at least one camera (32),
- at least one microphone (34),
- the data storage medium of claim 9 and
- a processor (38, 46, 48) arranged for executing the program recorded on the data storage medium.

11. The device of claim 10, wherein the device is a communication device.

## Patentansprüche

1. Verfahren zum Erfassen von Daten einschließlich Bild- und Audiodaten, wobei das Verfahren umfasst:
• zum Zeitpunkt t-1, Erkennen einer Szene entsprechend einem Verfahren zum Erkennen einer Szene, das von einer mobilen elektronischen Vorrichtung implementiert wird, und das umfasst:
- Aufnehmen (S12, S14) von ersten Bilddaten und ersten Audiodaten, Bildₜ₋₁ und Audioₜ₋₁;
- kurz nach diesem Schritt zum Aufnehmen (S12, S14), Analysieren (S20) sowohl der ersten Bilddaten als auch der ersten Audiodaten, Bildₜ₋₁ und Audioₜ₋₁, und Bestimmen (S30) einer Szene Sₜ₋₁ entsprechend der Analyse (S20);
• zum Zeitpunkt t:
- Erkennen einer Szene entsprechend einem Verfahren zum Erkennen einer Szene, das von einer mobilen elektronischen Vorrichtung implementiert wird, und das umfasst:
▪ Aufnehmen (S12, S14) von Bilddaten und Audiodaten, Bildₜ und Audioₜ, in Abhängigkeit von der Szene Sₜ₋₁, die zum Zeitpunkt t-1 erkannt wurde,
▪ kurz nach diesem Schritt zum Aufnehmen (S12, S14), Analysieren (S20) sowohl der Bilddaten als auch der Audiodaten, Bild₁ und Audio₁, und Bestimmen (S30) einer Szene Sₜ₋₁ entsprechend der Analyse (S20); und
- Modifizieren (S52, S54) der Bild- und Audiodaten, Bildₜ₋₁ und Audioₜ₋₁, die zum Zeitpunkt t-1 aufgenommen wurden, in Abhängigkeit von der Szene Sₜ₋₁, die zum Zeitpunkt t-1 erkannt wurde,
• zum Zeitpunkt t+1:
- Modifizieren (S52, S54) der Bild- und Audiodaten, Bildₜ und Audioₜ, die zum Zeitpunkt t aufgenommen wurden, in Abhängigkeit von der Szene Sₜ, die zum Zeitpunkt t erkannt wurde;
wobei:
- die Schritte zum Erkennen und zum Modifizieren (S12, S14, S20, S30, S52, S54), die zum Zeitpunkt t implementiert werden, iteriert werden.

2. Verfahren nach Anspruch 1, wobei das Analysieren (S20) das Evaluieren der Anwesenheit von mindestens einem Bildtyp in den Bilddaten und das Evaluieren der Anwesenheit von mindestens einem Audiotyp in den Audiodaten umfasst.

3. Verfahren nach Anspruch 2, wobei der Audiotyp einen Umgebungs-Audiotyp beinhaltet.

4. Verfahren nach Anspruch 2 oder 3, wobei das Evaluieren der Anwesenheit von mindestens einem Bildtyp und/oder Audiotyp das Evaluieren einer Wahrscheinlichkeit der Anwesenheit des mindestens einen Bild- und/oder Audiotyps umfasst.

5. Verfahren nach Anspruch 2, 3 oder 4, wobei das Evaluieren der Anwesenheit von mindestens einem Bildtyp und/oder Audiotyp das Evaluieren einer Zeit der Anwesenheit des mindestens einen Bild- und/oder Audiotyps umfasst.

6. Verfahren nach einem der Ansprüche 1 bis 5, wobei das Bestimmen (S30) der Szene das Auswählen der Szene aus einer Gruppe umfasst, die aus einer Porträtszene, einer Sportszene, einer mit Pflanzen bewachsenen Landschaftsszene, einer Schnee-Landschaftsszene, einer Strand-Landschaftsszene und/oder einer Stadtszene besteht.

7. Verfahren nach Anspruch 6, wobei die Analyse (S20) das Evaluieren der Anwesenheit von mindestens einem aus Folgendem umfasst:
- ein Gesicht in den Bilddaten und eine Stimme in den Audiodaten, wenn die Gruppe die Porträtszene beinhaltet;
- ein Gesicht, einen Innenraumort und eine lokale Bewegung in den Bilddaten, und ein Auto oder einen Lkw-Motor und einen Ballaufprall in den Audiodaten, wenn die Gruppe die Sportszene beinhaltet;
- einen mit Pflanzen bewachsenen Ort und einen Ort im Freien in den Bilddaten, Rufe von Zugvögeln, Hundegebell, Maunzen, Rufe von heimischen Vögeln und Windgeräusche in den Audiodaten, wenn die Gruppe die mit Pflanzen bewachsene Landschaftsszene beinhaltet;
- Schnee und ein Ort im Freien in den Bilddaten und Windgeräusche in den Audiodaten, wenn die Gruppe die Schnee-Landschaftsszene beinhaltet;
- das Meer, einen Ort im Freien und eine globale Bewegung in den Bilddaten, und Schreie von Möwen, Windgeräusche und Meeresrauschen in den Audiodaten, wenn die Gruppe die Strand-Landschaftsszene beinhaltet; und/oder
- ein Gesicht, künstliche Linien und einen Ort im Freien, ein Verkehrsschild und eine globale Bewegung in den Bilddaten, Windgeräusche, eine Fahrradklingel, einen Auto- oder Lkw-Motor, eine Autohupe und Sirenen in den Audiodaten, wenn die Gruppe die Stadtszene beinhaltet.

8. Computerprogramm, umfassend Befehle zum Ausführen des Verfahrens nach einem der Ansprüche 1 bis 7.

9. Datenspeichermedium, auf dem das Programm nach Anspruch 8 aufgezeichnet ist.

10. Mobile elektronische Vorrichtung, umfassend:
- mindestens eine Kamera (32);
- mindestens ein Mikrofon (34);
- das Datenspeichermedium nach Anspruch 9, und
- einen Prozessor (38, 46, 48), der zum Ausführen des auf dem Datenspeichermedium aufgezeichneten Programms eingerichtet ist.

11. Vorrichtung nach Anspruch 10, wobei die Vorrichtung eine Kommunikationsvorrichtung ist.

## Revendications

1. Procédé d'acquisition de données incluant des données d'image et des données audio, le procédé comprenant les étapes consistant à :
• en un instant t-1, détecter une scène selon une méthode mise en oeuvre par un dispositif électronique mobile pour détecter une scène qui comprend les étapes consistant à :
- capturer (S12, S14) des premières données d'image et des premières données audio, Imageₜ₋₁ et Audioₜ₋₁ ;
- peu après cette étape de capture (S12, S 14), analyser (S20) les premières données d'image et les premières données audio, Imageₜ₋₁ et Audioₜ₋₁ et déterminer (S30) une scène Sₜ₋₁ conformément à ladite analyse (S20) ;
• en un instant t :
- détecter une scène selon une méthode mise en oeuvre par un dispositif électronique mobile pour détecter une scène qui comprend les étapes consistant à :
▪ capturer (S12, S14) des données d'image et des données audio, Imageₜ et Audioₜ conformes à ladite scène Sₜ₋₁ détectée à l'instant t-1;
▪ peu après cette étape de capture (S12, S 14), analyser (S20) les données d'image et les données audio, Imageₜ et Audioₜ, et déterminer (S30) une scène *Sₜ* conformément à ladite analyse (S20) ; et
- modifier (S52, S54) lesdites données d'image et données audio, Imageₜ₋₁ et Audioₜ₋₁ capturées à l'instant t-1 conformément à la scène Sₜ₋₁ détectée à l'instant t-1 ;
• en un instant t+1 :
- modifier (S52, S54) lesdites données d'image et données audio, Imageₜ et Audioₜ capturées à l'instant t conformément à la scène Sₜ détectée à l'instant t ;
où
- les étapes de détection et de modification (S12, S14, S20, S30, S52, S54) mises en oeuvre à l'instant t sont itérées.

2. Procédé selon la revendication 1, où l'étape d'analyse (S20) comprend l'évaluation de la présence d'au moins un type d'image dans les données d'image et l'évaluation de la présence d'au moins un type d'audio dans les données audio.

3. Procédé selon la revendication 2, où le type d'audio inclut un type d'audio environnemental.

4. Procédé selon la revendication 2 ou 3, où l'évaluation de la présence de l'au moins un type d'image et/ou d'audio comprend l'évaluation d'une probabilité de la présence dudit au moins un type d'image et/ou d'audio.

5. Procédé selon la revendication 2, 3 ou 4, où l'évaluation de la présence d'au moins un type d'image et/ou d'audio comprend l'évaluation d'un temps de la présence dudit au moins un type d'image et/ou d'audio.

6. Procédé selon l'une quelconque des revendications 1-5, où la détermination (S30) de la scène comprend la sélection de la scène parmi un groupe comprenant une scène de portrait, une scène sportive, une scène de paysage végétal, une scène de paysage enneigé, une scène de paysage de plage et/ou une scène urbaine ou leurs combinaisons.

7. Procédé selon la revendication 6, où l'analyse (S20) comprend l'évaluation de la présence d'au moins :
- un visage dans les données d'image et d'une voix dans les données audio lorsque le groupe inclut une scène de portrait ;
- un visage, une localisation intérieure et un mouvement local dans les données d'image et un moteur de voiture ou de camion et un impact de ballon dans les données audio lorsque le groupe inclut la scène sportive ;
- un végétal et une localisation extérieure dans les données d'image, des cris d'oiseaux sauvages, des aboiements de chien, des miaulements et des cris d'oiseaux domestiques et du bruit de vent dans les données audio lorsque le groupe inclut une scène de paysage végétal ;
- de la neige et une localisation extérieure dans les données d'image et du bruit de vent dans les données audio lorsque le groupe inclut la scène de paysage enneigé ;
- la mer, une localisation extérieure et un mouvement général dans les données d'image et des cris de mouettes, un bruit de vent et des vagues dans les données audio lorsque le groupe inclut une scène de paysage de plage ; et/ou
- un visage, des lignes artificielles, une localisation extérieure, un panneau de signalisation et un mouvement général dans les données d'image, un bruit de vent, une sonnette de vélo, un moteur de voiture ou de camion, un klaxon de voiture et des bruits de sirènes dans les données audio lorsque le groupe inclut une scène urbaine.

8. Programme d'ordinateur comprenant des instructions pour exécuter le procédé selon l'une quelconque des revendications 1-7.

9. Support de stockage de données sur lequel est enregistré le programme selon la revendication 8.

10. Dispositif électronique mobile comprenant :
- au moins une caméra (32),
- au moins un microphone (34),
- le support de stockage de données selon la revendication 9 et
- un processeur (38, 46, 48) adapté pour exécuter le programme enregistré sur le support de stockage de données.

11. Dispositif selon la revendication 10, où le dispositif est un dispositif de communication.
